# EUROPÄISCHE PATENTSCHRIFT

(11) **EP 1 565 345 B1**
(45) Veröffentlichungstag und Bekanntmachung des Hinweises auf die Patenterteilung: **02.05.2007**
(21) Anmeldenummer: 03772299.8
(22) Anmeldetag: 04.11.2003
(51) Int. Cl.: B60Q 1/00, B60Q 1/14

(54) **SCHEINWERFER FÜR EIN FAHRZEUG UND ANORDNUNG ZUR VERBESSERUNG DER SICHT MIT SOLCHEN SCHEINWERFERN**
HEADLIGHT FOR A VEHICLE AND ARRANGEMENT FOR IMPROVING VISION WITH SUCH HEADLIGHTS
PHARE DE VEHICULE ET SYSTEME POUR AMELIORER LA VISION AVEC DE TELS PHARES

(30) Priorität: 29.11.2002 DE 10256100; 14.12.2002 DE 10258497
(43) Veröffentlichungstag der Anmeldung: 24.08.2005
(73) Patentinhaber: DaimlerChrysler AG, 70327 Stuttgart (DE)
(72) Erfinder: BÄUERLE, Ralf, 89182 Bernstadt (DE); HOLZ, Michael, 89250 Senden (DE); MOISEL, Jörg, 89231 Neu-Ulm (DE)
(86) Internationale Anmeldenummer: PCT/EP2003/012266
(87) Internationale Veröffentlichungsnummer: WO 2004/050421

(56) Entgegenhaltungen:
- EP-A- 0 566 027
- EP-A- 1 108 949
- EP-A- 1 118 877
- DE-A- 3 942 450
- DE-A- 10 115 868
- FR-A- 2 730 035
- US-A- 5 313 262
- US-A1- 2001 019 482
- US-B1- 6 238 074
- PATENT ABSTRACTS OF JAPAN vol. 2000, no. 14, 5. März 2001 (2001-03-05) & JP 2000 331510 A (ICHIKOH IND LTD), 30. November 2000 (2000-11-30)

## Beschreibung

Die Erfindung betrifft Scheinwerfer für ein Fahrzeug, welche sowohl sichtbares Licht als auch nichtsichtbare, infrarote Strahlung aussenden, Scheinwerfersysteme mit solchen Scheinwerfern sowie eine Anordnung zur Verbesserung der Sicht mit derartigen Scheinwerfern bzw. Scheinwerfersystemen.

Aus der deutschen Patentanmeldung DE 100 47 207 A1 und der DE 100 27 018 A1 sind Scheinwerfer für Fahrzeuge nach dem Projektionsprinzip bekannt, die mittels einer Lichtquelle, die sowohl sichtbares Licht als auch nichtsichtbare, infrarote Strahlung aussendet, und optischer Elemente zur Strahlformung, also zur Gestaltung der Lichtverteilung, beispielsweise in Form von Reflektoren, Blenden, Filtern oder Sammellinsen die Umgebung eines Fahrzeuges beleuchten können. Die verwendeten Lichtquellen stellen Halogenlampen bzw. Gasentladungslampen dar, die sowohl im sichtbaren wie im nichtsichtbaren Frequenzbereich Strahlung aussenden.

Aus der deutschen Patentanmeldung DE 43 35 244 A1 und der DE 100 55 462 A1 sind Scheinwerfer bekannt, die unter Verwendung von Laserdioden entweder als Infrarotscheinwerfer oder als Scheinwerfer für sichtbares Licht ausgebildet sind. Dabei zeigt DE 43 35 244 A1 eine Ausbildung des Scheinwerfers für infrarote Strahlung, der sich als sehr augensicher herausstellt.

Weiterhin ist bekannt, dass in ein Fahrzeug ein Kommunikationsnetzwerk mit optischem Bus mit ringförmiger Topologie zur Übertragung von Steuer- und Kommunikationsdaten, insbesondere von Video- und Audiodaten, eingebracht werden kann. Beispiele für diese Art von automobilen, optischen Bussen sind der D2B-Optical-Bus oder auch der MOST-Bus. Diese beiden Busse haben eine große Verbreitung erfahren. Beide Busse verwenden Lichtwellenleiter, die ringförmig die verschiedenen Teilnehmer des Kommunikationsnetzwerkes im Auto miteinander verbinden.

Auch ist aus der deutschen Patentanmeldung DE 40 36 199 A1 ein Fahrzeugscheinwerfer bekannt, bei dem in einem Gehäuse drei Reflektoren nebeneinander angeordnet sind, welche über jeweils einen Lichtwellenleiter mit einer einzigen Lichtquelle, welche von den Reflektoren und dem Gehäuse abgesetzt ist, mit Licht versorgt werden. Einen ähnlichen Aufbau einer Leuchte für Fahrzeuginnenräume ist aus der deutschen Offenlegungsschrift DE 199 52 795 A1 zu entnehmen. Diese zeigt ein Gehäuse mit einer Streuscheibe, welche das dem Gehäuse zugeführte Licht in den Fahrzeuginnenraum verteilt. Dem Gehäuse werden von abgesetzten Lichtquellen über einen oder mehrere Lichtwellenleiter, die selbst wiederum in einem oder mehreren Gehäusen untergebracht sind und von dem ersten Gehäuse abgesetzt sind, Licht sowie infrarote Strahlung zugeführt. Das erste Gehäuse zeigt dabei keine Lichtquelle. Aus EP-A-0 566 027 ist ein gattungsmäßiges Fahrzeugscheinwerfersystem bekannt.

Der Erfindung liegt die Aufgabe zugrunde, einen Scheinwerfer anzugeben, der sowohl sichtbares als auch nichtsichtbare Strahlung von beachtlicher Lichtstärke abgibt und einen einfachen Aufbau zeigt. Weiterhin liegt der Erfindung die Aufgabe zugrunde, ein Scheinwerfersystem und eine Anordnung zur Verbesserung der Sicht in Fahrzeugen anzugeben, die entsprechende Eigenschaften aufweisen.

Diese Aufgabe wird gelöst durch ein Scheinwerfersystem mit den Merkmalen des Anspruches 1, ein Scheinwerfersystem mit den Merkmalen des Anspruches 10 und eine Anordnung zur Verbesserung der Sicht in Fahrzeugen mit den Merkmalen des Anspruches 12.

Vorteilhafte Weiterbildungen sind Gegenstand der Unteransprüche.

Die Erfindung betrifft einen Scheinwerfer für ein Fahrzeug, bei dem im Inneren des Gehäuses die Lichtquelle für sicht bares Licht angeordnet ist und außerhalb des Gehäuses, insbesondere von dem Gehäuse abgesetzt und getrennt davon, eine zweite Lichtquelle für infrarote Strahlung vorgesehen ist. Die durch die zweite Lichtquelle generierte infrarote Strahlung wird über einen mit der zweiten Lichtquelle verbundenen und optisch gekoppelten Lichtwellenleiter in das Gehäuse geleitet. Dort tritt das Licht aus dem Lichtwellenleiter im Bereich der Lichtquelle für das sichtbare Licht aus und wird entsprechend dem sichtbaren Licht mittels eines optischen Elementes, das beispielsweise als Reflektor, Sammellinse, Streulinse Diffusorscheibe, Klarglasscheibe oder eine Kombination daraus ausgebildet sein kann, durch den Scheinwerfer abgegeben. Durch das abgegebene Licht, das bei Betrieb beider Lichtquellen, eine Überlagerung von sichtbarem Licht und Infrarotstrahlung darstellt, ist es möglich, die Umgebung eines Fahrzeuges zielgerichtet zu beleuchten.

Mit dieser Beleuchtung durch den erfindungsgemäßen Scheinwerfer ist es möglich, einerseits die Umgebung für das menschliche Auge sichtbar zu machen und andererseits die Umgebung für ein sog. Infrarotnachtsichtgerät besser erfassbar zu machen. Der hierzu verwendete Scheinwerfer mit der abgesetzten bzw. außerhalb des Gehäuses angeordneten Lichtquelle ermöglicht es, die zweite Lichtquelle besonders auszuwählen und so anzuordnen, dass sie eine sehr gute Lichtabgabe, z.B. im Sinne der Lichtstärke, der Frequenzstabilität oder der Langzeitstabilität, aufweist. Erfindungsgemäß wird dies dadurch möglich, dass die einschränkenden räumlichen und thermischen oder sonstigen Bedingungen im Inneren des Gehäuses durch die erfindungsgemäße Anordnung der zweiten Lichtquelle nicht greifen.

Darüber hinaus ist durch diese erfindungsgemäße Anordnung sichergestellt, dass eine Beeinträchtigung der Lichtabgabe des Scheinwerfers durch ein im Gehäuse und damit im Bereich der Lichtführung des sichtbaren Lichts im Gehäuse keine zweite Lichtquelle gegeben ist, die für Abschattungen und sonstige optische Behinderungen sorgt. Durch die erfindungsgemäße Verwendung von zwei Lichtquellen, eine für das sichtbare Licht und eine für die infrarote Strahlung, ist darüber hinaus gewährleistet, dass beide Lichtquellen für ihre Funktion optimiert ausgewählt sein können und somit durch den Scheinwerfer ein sehr wirkungsvolles sichtbares Licht aber auch eine sehr wirkungsvolle, nichtsichtbare IR-Strahlung abgegeben werden. Durch die Verwendung dieses erfindungsgemäßen Scheinwerfers gelingt es, einen Scheinwerfer anzugeben, der die Verkehrssicherheit erhöht.

Nach einer bevorzugten Ausführungsform der Erfindung ist das Ende des Lichtwellenleiters im Bereich der Lichtquelle so angeordnet, dass die austretende Infrarotstrahlung in Richtung des Reflektors oder der Sammellinse, insbesondere im wesentlichen parallel zur optischen Achse des Scheinwerfers, abgegeben wird. Hierdurch ist ein sehr einfacher Aufbau des erfindungsgemäßen Scheinwerfers gegeben. Dieser zeigt typischerweise eine ausgesprochen große Reichweite des infraroten Lichtes, das von der zweiten Lichtquelle erzeugt, über den Lichtwellenleiter in das Gehäuse eingebracht und über die optischen Elemente, die vorzugsweise als Reflektor bzw. als Sammellinse ausgebildet sind, zielgerichtet zusammen mit dem sichtbaren Licht ausgesandt wird. Auf zusätzliche optische Elemente ausschließlich für die Lichtführung der infraroten Strahlung kann weitgehend oder vollständig verzichtet werden.

Bei den optischen Elementen kann es sich selbstverständlich auch um eine Kombination mehrerer einzelner optischer Teilelemente handeln, die gemeinsam zusammenwirken und ein gemeinsames optisches Element bilden. Beispielsweise kann ein solches optisches Element durch einen Reflektor und einen diesem zugeordneten Diffusor oder eine Sammellinse gebildet sein. Durch derartige optische Elemente aus mehreren optischen Teilelementen lassen sich sehr ausgeprägte Lichtverteilungen gestalten, die sich durch sehr differenzierte räumliche Lichtverteilungen mit ausgeprägten Hell-/Dunkelgrenzen auszeichnen. Darüber hinaus gibt es verschiedene Arten von Scheinwerfern, die einen erfindungsgemäßen Aufbau zeigen können. Beispiele für derartige Scheinwerfer sind insbesondere die Frontscheinwerfer, die das Fahr- und Fernlicht bzw. das Abblendlicht zur Verfügung stellen, aber auch Nebelscheinwerfer, Kurvenleuchten, Blinker oder auch Rückfahrscheinwerfer bzw. Bremslichter oder Nebelschlussleuchten können derartige erfindungsgemäße Scheinwerfer darstellen. All diese erfindungsgemäßen Scheinwerfern ist gemeinsam, dass sie sowohl sichtbares Licht als auch infrarote, nichtsichtbare Strahlung ausstrahlen können und die infrarote Strahlung durch eine zweite Lichtquelle, die nicht im Inneren des Gehäuses angeordnet ist, zur Verfügung gestellt bekommen.

Es hat sich besonders bewährt, den Lichtwellenleiter zumindest im Bereich der Lichtquelle, die typischerweise als Halogen- oder als Xenon-Lichtquelle ausgebildet ist, in Form eines Glasfaserlichtwellenleiters auszubilden. Hierdurch ist sichergestellt, dass die hohen Temperaturen, die durch die Lichtquelle für sichtbares Licht erzeugt werden, keinen wesentlichen schädlichen Einfluss auf den Lichtwellenleiter und somit die optischen Übertragungseigenschaften des Lichtwellenleiters haben. Dies ist umso bedeutsamer, je näher das Lichtwellenleiterende bzw. der Lichtwellenleiter der ersten Lichtquelle kommt. Wird das Ende des Lichtwellenleiters sehr nahe an die erste Lichtquelle angeordnet, so gelingt es, die auf die erste Lichtquelle optimierte Anordnung aus den optischen Elementen und der erste Lichtquelle auszunutzen und zu einer entsprechenden optimierten Anordnung und damit Einkopplung der infraroten Strahlung der zweiten Lichtquelle in den Strahlkegel des Scheinwerfers zu erreichen. Dabei hat es sich besonders bewährt, nicht nur den Endbereich des Lichtwellenleiters als Glasfaser-Lichtwellenleiter auszubilden, sondern den gesamten Lichtwellenleiter als Glasfaser auszubilden. Hierdurch wird eine sehr robuste Ausbildung des Lichtwellenleiters für den erfindungsgemäßen Scheinwerfer geschaffen, der es ermöglicht, die zweite Lichtquelle fernab von dem Gehäuse, insbesondere im Bereich des Motorraums, des Innenraumes oder des Kofferraumes eines Fahrzeuges, anzuordnen. Durch die Verwendung einer Glasfaser als Lichtwellenleiter ist ein sehr dämpfungsarmes und thermisch sowie mechanisch stabiles optisches Übertragungssystem gegeben.

Nach einer bevorzugten Ausbildung des Lichtwellenleiters wird ein Lichtwellenleiter gewählt, der einen Durchmesser von 1 µm oder mehreren 100 µm, insbesondere von etwa 1 mm zeigt. Diese großen Durchmesser sind insbesondere im Endbereich des Lichtwellenleiters von großer Bedeutung. Mithin ist es möglich, dass der Lichtwellenleiter aus mehreren Teilstücken besteht, von denen zumindest der Endbereich einen solch ausgeprägten Durchmesser aufweist.

Es haben sich neben den Glaserfaser-Lichtwellenleitern auch sog. Polymer-Clad-Silica bzw. polymerbeschichtete Glasfaser-Lichtwellenleiter, auch PCS-Lichtwellenleiter genannt, bewährt. Diese zeigen bei geringerem Durchmesser und damit erhöhter Flexibilität und Beweglichkeit gegenüber einem dickeren Glasfaser-Lichtwellenleiter eine vergleichbare Dämpfung, was sie besonders interessant für den Einsatz in einer automobilen Umgebung macht. Wie auch die Glasfaser-Lichtwellenleiter sind auch diese polymerbeschichteten Glasfaser-Lichtwellenleiter als Multimode-Lichtwellenleiter ausgebildet.

Es hat sich besonders bewährt, im Inneren des Gehäuses einen Lichtwellenleitertyp, insbesondere einen Glasfaser-Lichtwellenleiter von großem Durchmesser, insbesondere im Bereich von über 500 µm und außerhalb des Gehäuses einen anderen Lichtwellenleiter vorzusehen, der insbesondere eine größere Flexibilität, leichte Verbaubarkeit usw. aufweist. Um die Lichtwellenleiter im Gehäuse mit dem Lichtwellenleiter außerhalb des Gehäuses sicher zu verbinden, wird in dem Gehäuse ein Verbindungselement vorgesehen, das eine optische, lösbare Kopplung zwischen dem inneren und dem äußeren Lichtwellenleiter ermöglicht. Diese lösbare Verbindung ermöglicht ein sehr einfaches Integrieren des Scheinwerfers in ein Fahrzeug bzw. in eine Fahrzeugkarosserie.

Hierdurch wird es in besonderem Maße möglich, eine sehr wirksame Einkopplung der infraroten Strahlung der zweiten Lichtquelle in den Lichtwellenleiter zu erreichen, da die Stirnfläche von ausreichender Größe relativ zu der Lichtaustrittsfläche der zweiten Lichtquelle ist. Darüber hinaus zeigt ein Lichtwellenleiter dieser Abmessung eine besondere mechanische und thermische Stabilität. Durch die gewählte Abmessung gelingt es, die Dämpfungsverluste ausreichend gering zu halten, wodurch die zweite Lichtquelle entsprechend kleiner in der Dimensionierung und damit in den Abmessungen sowie den notwendigen lichtenergetischen Ressourcen für den Betrieb gewählt werden kann. Dies führt zu einem günstigeren Scheinwerfer.

Von besonderer Bedeutung haben sich Laser-Lichtquellen für Infrarotstrahlung als zweite Lichtquelle herausgestellt. Diese Laser-Lichtquelle haben sich durch ihre starken Lichtsignale von definierter Frequenz bzw. Wellenlänge besonders bewährt. Der Nachteil, dass sie zur guten Funktionsfähigkeit thermisch kontrolliert werden müssen, und die dafür notwendigen Vorkehrungen einen nicht unbeachtlichen Raum, Energie und Kosten benötigen, ist durch die erfindungsgemäße Anordnung der zweiten Lichtquelle außerhalb des Gehäuses des Scheinwerfers von untergeordneter Bedeutung. Damit ist sichergestellt, dass die Nachteile der Verwendung von Laser-Lichtquellen, die eine möglichst geringe Temperaturschwankung von typisch unter +/- 15 °C für ihr gutes und wirkungsvolles Funktionieren benötigen, sich nicht wesentlich auf die Ausbildung und Wirkungsweise des Scheinwerfers für sichtbares Licht und nichtsichtbares, infrarote Strahlung auswirken.

Dabei hat es sich besonders bewährt, einen Infrarotlaser zu verwenden, der Licht einer Wellenlänge von etwa 808 nm, 850 nm bzw. 875 nm aussendet. Von den aktiven optischen Komponenten, die infrarote Strahlung in einem Wellenlängenbereich zwischen 780 nm und 1.000 nm, also im nichtsichtbaren Lichtbereich, ausstrahlen, zeigen diejenigen, die etwa in den besonders bevorzugten Wellenlängenbereichen arbeiten, eine besonders vorteilhafte Effizienz, beispielsweise im Rahmen der Empfindlichkeit oder der Lichtausbeute. Daher haben sich diese optischen Komponenten im Zusammenhang mit der Erfindung als besonders vorteilhaft erwiesen. Diese genannten Wellenlängen haben sich insbesondere für die Verwendung im Zusammenhang mit einem Infrarotnachtsichtgerät, also einer Vorrichtung zur Verbesserung der Sicht in Fahrzeugen, als besonders geeignet herausgestellt. Wird die zweite Lichtquelle im Motorraum oder im Kofferraum angeordnet, so wird es durch entsprechende Kopplung an Rahmenteile oder andere Bauteile des Kofferraums oder Motorraums möglich, dass auf eine aufwendige insbesondere aktive Kühlung bzw. Temperierung der Infrarot-Halbleiterlichtquelle verzichtet werden kann. Beispielsweise hat es sich bewährt, die z.B. als Halbleiterlaser ausgebildete zweite Lichtquelle thermisch und mechanisch mit der Begrenzungswand vom Kofferraumes zum Fahrzeuginnenraum und entsprechend vom Motorraum zum Innenraum zu verbinden und dadurch von der Temperierung des Fahrzeuginnenraumes, die durch eine Heiz- oder Klimatisierungsvorrichtung im Fahrzeug geschaffen wird, zu profitieren.

Weiterhin hat es sich bewährt, die zweite Lichtquelle im Bereich von thermisch geregelten Komponenten anzuordnen, die eine Umgebungswärme entsprechend dem bevorzugten Funktionsbereich der zweiten Lichtquelle aufweisen. In diesem Fall wird von der geregelten Temperierung, beispielsweise des Kühlwasserkreislaufes, des Motors, Nutzen gezogen, und es gelingt dadurch, auf eigene Temperierung der zweiten Lichtquelle zu verzichten. Dies führt dazu, dass eine sehr kostengünstige und funktionsfähige Ausbildung des erfindungsgemäßen Scheinwerfer geschaffen ist.

Als besonders vorteilhaft hat es sich erwiesen, die zweite Lichtquelle, die insbesondere eine Laser-Lichtquelle für infrarote Strahlung darstellt, im Innenraum des Fahrzeuges, also in der Fahrgastzelle des Fahrzeuges unterzubringen. Hierdurch gelingt es, auf eine aktive Temperierung der zweiten Lichtquelle völlig zu verzichten, ohne dass es zu einer merklichen oder wesentlichen Einschränkung der Funktionsfähigkeit der zweiten Lichtquelle, und damit zu einer wesentlichen Veränderung der Lichtabgabe des Scheinwerfers mit Infrarotstrahlung kommt. Dies wird insbesondere dadurch ermöglicht, dass der Fahrzeuginnenraum im Betrieb des Fahrzeuges eine für den Benutzer angenehme Temperatur typisch im Bereich zwischen 15 °C und 35 °C aufweist, was einer Temperatur entspricht, die einer typischen Betriebstemperatur eines Infrarotstrahlungslasers entspricht. Auf eine zusätzliche, aktive Temperiereinheit kann in diesem Fall völlig verzichtet werden. Durch eine gute thermische Ankopplung der zweiten Lichtquelle an den Innenraum des Fahrzeuges ist eine ausreichende Temperaturstabilität der zweiten Lichtquelle, und damit der Emissionseigenschaften des Infrarotlasers, als zweite Lichtquelle gegeben. Dies wirkt sich zudem vorteilhaft auf die Langlebigkeit der zweiten Lichtquelle und damit auf den Scheinwerfer aus.

Nach einer bevorzugten Ausbildung der Erfindung wird die zweite Lichtquelle als gekapselte oder vergossene Einheit realisiert. Hierdurch wird es in besonderem Maße möglich, die zweite Lichtquelle in mechanisch und chemisch nicht so geschützten Umgebungen, wie beispielsweise dem Motorraum eines Fahrzeuges oder im Bereich der Außenhaut des Fahrzeuges, unterzubringen. Die Anordnung der zweiten Lichtquelle, beispielsweise im Motorraum, erweist sich aber von großem Vorteil, da die zweite Lichtquelle von den Frontscheinwerfern nur wenig entfernt ist und somit eine Übertragung des durch die zweite Lichtquelle generierten Lichtes über den Lichtwellenleiter zu dem Gehäuse in den Bereich der ersten Lichtquelle ohne wesentliche Verluste möglich ist. Hierdurch kann die zweite Lichtquelle kleiner ausgebildet werden, da sie geringere Verluste auf dem Weg zur Ausstrahlung der Infrarotstrahlung durch den Scheinwerfer aufweist. Darüber hinaus erweist sich diese vergossene oder gekapselte zweite Lichtquelle als besonders robust und zeigt eine große Lebensdauer, wodurch die Verfügbarkeit des Scheinwerfers erhöht wird, was sich wiederum in einer erhöhten Sicherheit niederschlägt.

Darüber hinaus betrifft die Erfindung ein Scheinwerfersystem für Fahrzeuge mit mehreren Scheinwerfern nach dem Projektionsprinzip mit einem Gehäuse und einer darin angeordneten Lichtquelle für sichtbares Licht und optischen Elementen zur Festlegung der Lichtverteilung des sichtbaren Lichtes. Den Scheinwerfern ist wenigstens eine zweite, weitere Lichtquelle für infrarote Strahlung, die insbesondere als Infrarot-Laserlichtquelle ausgebildet ist, zugeordnet. Das durch die eine oder mehreren zweiten Lichtquellen generierte infrarote Licht wird über ein Netzwerk aus Lichtwellenleitern in das Innere der Gehäuse geleitet und dort im Bereich der Lichtquellen für sichtbares Licht so abgegeben, dass es mit dem sichtbaren Licht überlagert werden kann und gemeinsam mit diesem zur Beleuchtung der Umgebung des Fahrzeuges verwendet wird. Das erfindungsgemäße Scheinwerfersystem zeichnet sich dadurch aus, dass wenige zweite Lichtquellen ausreichen, mehrere Scheinwerfer zielgerichtet mit infrarotem Licht zu versorgen und die Möglichkeit zu schaffen, neben dem sichtbaren Licht auch unsichtbare, infrarote Strahlung über dieselben, gemeinsamen optischen Elemente zur Beleuchtung der Fahrzeugumgebung zu verwenden. Dies führt zu einer sehr einfachen, kostengünstigen und infrarotstrahlungsoptimierten Anordnung von Scheinwerfern, die sowohl sichtbares Licht als auch Infrarotstrahlung ausstrahlen.

Dabei ist das Netzwerk aus mehreren Lichtwellenleitern aufgebaut, die abhängig von der Anzahl der im Scheinwerfersystem vorhandenen Scheinwerfer mit Strahlteilern, sog. Splittern, bzw. gegebenenfalls Strahlungsvereinigern versehen sind. Durch die Verwendung von Strahlteilern gelingt es, die Länge der verwendeten Lichtwellenleiter zu reduzieren und dadurch die Kosten einerseits für die Lichtwellenleiter als solches und andererseits für die erforderliche Verlegung der Lichtwellenleiter zu reduzieren. Um dies in besonderem Maße zu erreichen, werden die zweiten Lichtquellen bevorzugt im Bereich zwischen den Gehäusen der Scheinwerfer eines Scheinwerfersystems angeordnet, so dass die Länge der verwendeten Lichtwellenleiter, und damit die Verluste an Lichtintensität, möglichst gering gehalten werden kann.

Nach einer besonderen Ausbildung des Scheinwerfersystems ist das Netzwerk in Form eines Ringes oder Teilringes ausgebildet, von dem einzelne Stichleitungen zu den einzelnen Scheinwerfern abzweigen. Hierdurch gelingt es, in besonders vorteilhafter Weise den Aufwand für die Integration der Lichtwellenleiter im Fahrzeug zu reduzieren und dadurch die Einsetzbarkeit des Systems in einem Fahrzeug zu verbessern oder überhaupt erst zu ermöglichen. Der für die Ringleitung verwendete Lichtwellenleiter wird bevorzugt als Lichtwellenleiter mit einem Durchmesser von über 1 mm ausgewählt, von dem eine Auskopplung zu den einzelnen Scheinwerfern besonders einfach mit geringer Dämpfung ermöglicht ist.

Darüber hinaus betrifft die Erfindung eine Anordnung zur Verbesserung der Sicht in Fahrzeugen mit einem Scheinwerfer oder einem Scheinwerfersystem, die neben einer Lichtquelle für sichtbares Licht eine von dem Gehäuse des Scheinwerfers abgesetzte, außerhalb des Gehäuses angeordnete zweite Lichtquelle für die Generierung der Infrarotstrahlung mit einem dieser zugeordneten Lichtwellenleiter zur Übertragung der IR-Strahlung von der zweiten Lichtquelle in den Bereich der Lichtquelle für sichtbares Licht aufweist. Dieser Scheinwerfer bzw. das Scheinwerfersystem sendet sowohl sichtbares Licht als auch unsichtbare, infrarote Strahlung zur Beleuchtung der Umgebung des Fahrzeuges aus. Diese beleuchtete Umgebung wird mit einer Kamera erfasst und die erfassten Bilddaten ohne weitere Bearbeitung oder nach einer Aufbereitung durch eine Bildverarbeitungseinheit mittels einer Bildwiedergabeeinheit dem Benutzer des Fahrzeuges zur Verfügung gestellt. Die beschriebene Anordnung zur Verbesserung der Sicht, bspw. auch Infrarot-Nachtsichtgerät genannt, erweist sich als sehr wirkungsvolle und einfache Anordnung zur Verbesserung der Sicht.

Der beschriebenen Erfindung in den verschiedenen Ausprägungen ist gemeinsam, dass sie sich als sehr augensicher erweist. Durch die erfindungsgemäße Ausbildung, bei der das sichtbare Licht und die unsichtbare, infrarote Strahlung, welche eine unbemerkte Augenschädigung herbeiführen kann, mithilfe der gemeinsamen optischen Elemente gemeinsam von dem Scheinwerfer ausgestrahlt werden, wird auf einfache und wirksame Weise gewährleistet, dass ein durch das sichtbare Licht geblendeter Verkehrsteilnehmer sich durch die Blendung des sichtbaren Lichtes abwendet, die Augen schließt oder anderweitig eine Blendung durch das sichtbare Licht verhindert, was gleichzeitig dazu führt, dass die Exposition der Augen durch die nichtsichtbare, infrarote Strahlung begrenzt ist. Diese Begrenzung ermöglicht es, die Gefahr einer Schädigung der Augen durch ein zu starkes Aussetzen mit starker infraroter Strahlung erheblich abgesenkt ist. Durch diese Absenkung ist mit keiner beachtlichen Schädigung zu rechnen, auch wenn sehr leistungsstarke zweite Lichtquellen, insbesondere Infrarot-Laserlichtquellen, verwendet werden.

Durch diese erfindungsgemäße Ausbildung eines Scheinwerfers, eines Scheinwerfersystems oder einer Anordnung zur Verbesserung der Sicht, ist eine sehr hohe Augensicherheit bei einfachem Aufbau eines Scheinwerfers, eines Scheinwerfersystems oder einer Vorrichtung zur Verbesserung der Sicht erreicht worden. Auf großflächige optische Elemente, wie große Frontlinsen für die Scheinwerfer, die sich negativ auf ein Design eines Fahrzeuges auswirken, kann erfindungsgemäß verzichtet werden.

Im folgenden wird die Erfindung anhand einer beispielhaften Ausführung, welche in den Figuren dargestellt ist, beschrieben.

Dabei zeigen:
- Fig. 1: ein Fahrzeug mit einer beispielhaften Ausbildung eines erfindungsgemäßen Scheinwerfers und
- Fig. 2: den Aufbau des Gehäuses eines beispielhaften erfindungsgemäßen Scheinwerfers im Längsschnitt.

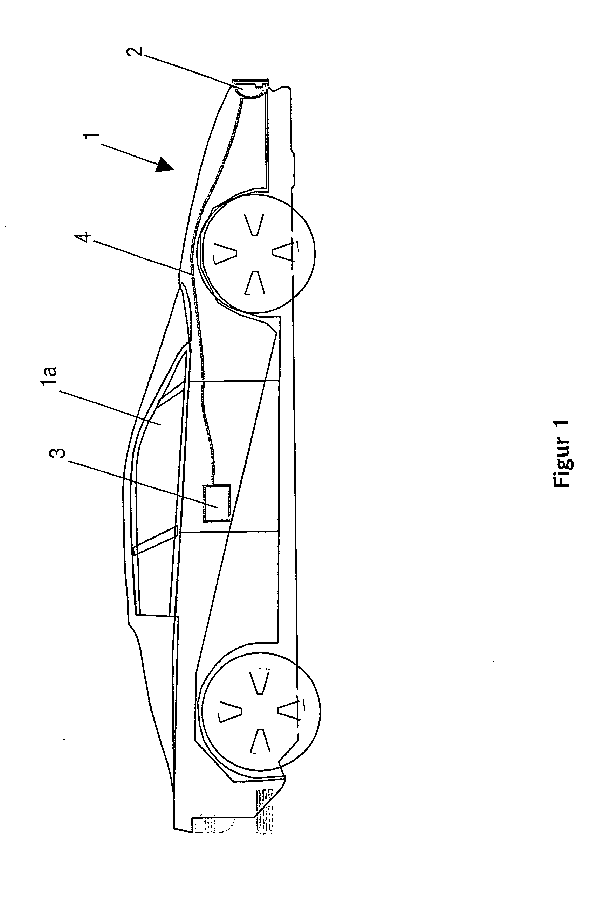

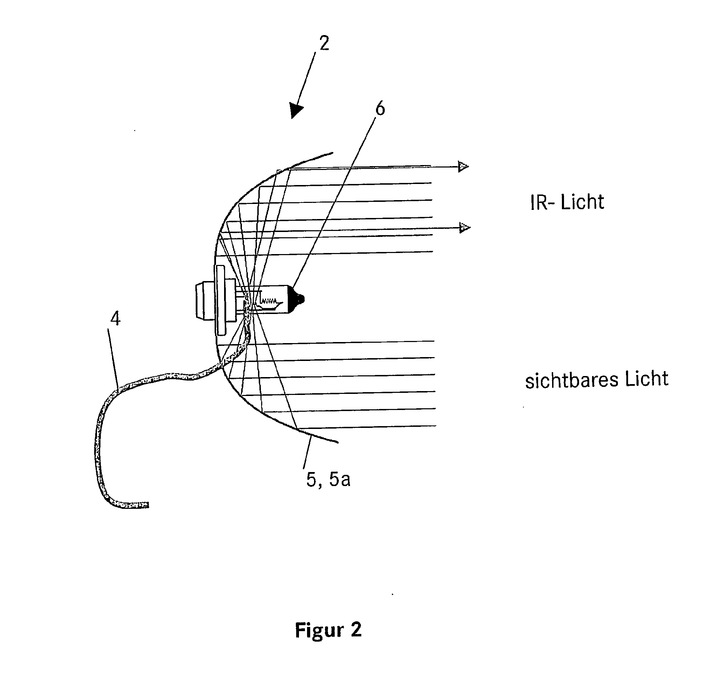

In Fig. 1 ist ein Fahrzeug 1 dargestellt, das einen Frontscheinwerfer 2 zeigt, der nachfolgend anhand der Fig. 2 näher erläutert wird. Im Innenraum 1a des Fahrzeuges 1, welches dazu verwendet wird, den Fahrer und Beifahrer des Fahrzeuges aufzunehmen, ist eine Lichtquelle 3 für infrarote, nichtsichtbare Strahlung angeordnet. Diese Infrarot-Laserlichtquelle 3 benötigt keine aktive Temperierung, die typischerweise für derartige Module in Form von Peltier-Elementen und entsprechenden Ansteuerungen und Regelkreisen ausgebildet sind, und somit mit erheblichen Kosten verbunden sind. Diese Lichtquelle 3 ist ausschließlich mit dem Fahrzeuginnenraum 1a thermisch und mechanisch gekoppelt, so dass sie die Temperatur des Fahrzeuginnenraumes 1a annimmt. Da der Fahrzeuginnenraum 1a im Fahrzeugbetrieb eine Temperatur von typisch 20 °C +/- 5 °C aufweist, ist sichergestellt, dass diese Lichtquelle 3 für infrarote Strahlung in ihrem optimalen oder in einem sehr gut geeigneten Betriebsbereich arbeitet und somit ein sehr stabiles und leistungsstarkes Signal mittels infraroter Strahlung abgibt.

Die von der Infrarot-Lichtquelle 3 generierte Strahlung wird über ein mit der Lichtquelle 3 verbundenes Netzwerk 4, von dem hier in Fig. 1 nur ein Lichtwellenleiter 4 dargestellt ist, dem Gehäuse 5 des erfindungsgemäßen Scheinwerfers 2 zugeführt. Der Lichtwellenleiter 4 ist in den Innenraum des Gehäuses 5 geführt, wobei sein Ende nahe der Lichtquelle 6 für sichtbares Licht angeordnet ist. Der verwendete Lichtwellenleiter 4 stellt einen etwa 1 mm im Durchmesser starken Glasfaser-Lichtwellenleiter 4 dar, der sich einerseits durch besondere mechanische Stabilität und chemische Robustheit auszeichnet. Darüber hinaus erweist er sich aber auch als thermisch sehr stabil. Dies führt dazu, dass er auch in ungünstigen Positionen des Fahrzeuges, beispielsweise im Motorraum oder durch den Motorraum, verlegt werden kann. Die besondere Temperaturstabilität ermöglicht es auch, den Lichtwellenleiter 4 sehr nahe der Halogen-Lichtquelle 6 zu bringen. Im Bereich der Halogen-Lichtquelle 6 werden sehr hohe Temperatur erreicht, die gerade durch den Glasfaser-Lichtwellenleiter 4 gut verkraftet werden können. Ein vorzeitiges Altern oder eine Beschädigung des Lichtwellenleiters 4 durch die Temperatur im Inneren des Gehäuses 5 im Bereich der ersten Lichtquelle 6 ist somit nicht zu befürchten. Mithin erweist sich diese Anordnung als besonders langzeitstabil.

Die infrarote Strahlung der Infrarot-Laserlichtquelle 3 tritt am Ende des Glasfaser-Lichtwellenleiter 4 im Bereich der Halogen-Lichtquelle 6 aus. Dabei strahlt die infrarote, nichtsichtbare Strahlung, wie in Fig. 2 dargestellt, entsprechend dem durch die Halogen-Lichtquelle 6 ausgestrahlten sichtbaren Licht nach oben und überlagert sich mit dem sichtbaren Licht. Durch die enge Nachbarschaft des Endes des Lichtwellenleiters 4 und der Halogen-Lichtquelle 6 gelingt es, die auf die Position der Halogen-Lichtquelle 6 optimierten optischen Elemente des Scheinwerfers 2 besonders wirksam und effektiv zu nutzen. Von besonderer Bedeutung ist hierbei der Reflektor 5a, der in seiner Gestalt der Position der Lichtquelle 6 für sichtbares Licht optimal angepasst ist.

Wie aus Fig. 2 ersichtlich ist, überlagern sich die sichtbare Strahlung mit der Infrarotstrahlung. Dies stellt in besonders einfacher und wirkungsvoller Weise sicher, dass ein Schädigen der Augen eines durch den erfindungsgemäßen Scheinwerfer 2 geblendeten Passanten weitgehend ausgeschlossen ist. Dies wird dadurch erreicht, dass der Passant durch das sichtbare Licht für ihn erkennbar geblendet wird und er durch Abwenden des Kopfes, durch Vorhalten der Hand vor die Augen, durch Schließen der Lider und ähnliche Maßnahmen, ein Blenden durch die sichtbare Lichtstrahlung verhindert und damit gleichzeitig automatisch ein Schädigen der Augen, insbesondere der Sehnerven, durch die nichtsichtbare infrarote Strahlung verhindert wird.

Durch die gemeinsame Verwendung der optischen Elemente ist ein sehr einfacher und kostengünstiger Aufbau des erfindungsgemäßen Scheinwerfers 2 gegeben. Darüber hinaus wird durch die abgesetzte Realisierung der zweiten Lichtquelle 3 für Infrarotstrahlung im Fahrzeuginnenraum 1a eine Beschränkung der Ausbildung der zweiten Lichtquelle 3 durch beschränkende Einflüsse einer Integration in das Gehäuse 5 des Scheinwerfers 2 verhindert (z.B. zur Verhinderung von Abschattungen), so dass eine besonders wirksame zweite Lichtquelle 3 realisiert werden kann.

## Patentansprüche

1. Fahrzeugscheinwerfersystem zur Beleuchtung der Fahrzeugumgebung mit einem Scheinwerfer, insbesondere nach dem Projektionsprinzip, mit einem Gehäuse, einer ersten Lichtquelle für sichtbares Licht in dem Gehäuse, einem mit dem Gehäuse verbundenen optischen Element zur Gestaltung der Lichtverteilung in der Fahrzeugumgebung und einer zweiten Lichtquelle für infrarote Strahlung,
wobei die zweite Lichtquelle außerhalb des Gehäuses des Scheinwerfers insbesondere getrennt davon angeordnete und ein Lichtwellenleiter vorgesehen ist,
wobei die zweite Lichtquelle mit dem Gehäuse dahingehend optisch verbunden ist,
dass die durch die zweite Lichtquelle generierte IR-Strahlung über den Lichtwellenleiter in das Gehäuse eingebracht wird, wobei
die durch die zweite Lichtquelle generierte IR-Strahlung im Bereich der ersten Lichtquelle abgegeben und dem sichtbaren Licht zur großflächigen Bestrahlung der Fahrzeugumgebung im Gehäuse überlagert werden kann, **dadurch gekennzeichnet,**
**dass** der Lichtwellenleiter zumindest im Bereich der ersten Lichtquelle als Glasfaser-Lichtwellenleiter ausgebildet ist
und **dass** der Lichtwellenleiter wenigstens aus zwei Teilen besteht, ein Teil im Inneren des Gehäuses und ein Teil außerhalb des Gehäuses, wobei diese Teile über ein im Gehäuse angeordnetes Verbindungselement lösbar optisch miteinander verbunden sind.

2. Fahrzeugscheinwerfersystem nach Anspruch 1,
**dadurch gekennzeichnet,**
**dass** das Ende des Lichtwellenleiters so im Bereich der Lichtquelle angeordnet ist, dass die IR-Strahlung in Richtung eines als Sammellinse oder als Reflektor ausgebildeten optischen Elementes abgegeben wird.

3. Fahrzeugscheinwerfersystem nach Anspruch 1 oder 2,
**dadurch gekennzeichnet,**
**dass** die zweite Lichtquelle eine Laser-Lichtquelle für IR-Strahlung, insbesondere für Strahlung mit einer Wellenlänge von etwa 808 nm, 850 nm bzw. 875 nm ist.

4. Fahrzeugscheinwerfersystem nach einem der vorstehenden Ansprüche,
**dadurch gekennzeichnet,**
**dass** der Lichtwellenleiter zumindest in einem Endbereich einen Durchmesser von 1 µm oder mehreren 100 µm, insbesondere von etwa 1 mm, zeigt.

5. Fahrzeugscheinwerfersystem nach einem der vorstehenden Ansprüche,
**dadurch gekennzeichnet,**
**dass** die zweite Lichtquelle im Motorraum oder im Kofferraum angeordnet ist.

6. Fahrzeugscheinwerfersystem nach einem der vorstehenden Ansprüche 1 bis 4,
**dadurch gekennzeichnet,**
**dass** die zweite Lichtquelle im Innenraum eines Fahrzeuges angeordnet ist.

7. Fahrzeugscheinwerfersystem nach einem der vorstehenden Ansprüche 5 oder 6,
**dadurch gekennzeichnet,**
**dass** der zweiten Lichtquelle keine eigene Temperiereinheit zugeordnet ist.

8. Fahrzeugscheinwerfersystem nach einem der vorstehenden Ansprüche,
**dadurch gekennzeichnet,**
**dass** die zweite Lichtquelle als vergossene oder gekapselte Einheit ausgebildet ist.

9. Fahrzeugscheinwerfersystem nach einem der vorstehenden Ansprüche, **dadurch gekennzeichnet, dass** der Lichtwellenleiter wenigstens aus zwei Teilen besteht, einen im Inneren des Gehäuses und einen außerhalb des Gehäuses, wobei diese beiden Teile unterschiedlich ausgebildet sind.

10. Fahrzeugscheinwerfersystem mit mehreren Scheinwerfern, insbesondere nach dem Projektionsprinzip, die mit einem Gehäuse, einer Lichtquelle für sichtbares Licht in dem Gehäuse und einem optischen Element zur Gestaltung der Lichtverteilung und einer zweiten Lichtquelle für infrarote Strahlung versehen sind,
wobei wenigstens eine außerhalb der Gehäuse angeordnete zweite Lichtquelle für infrarote Strahlung und ein Netzwerk aus Lichtwellenleitern vorgesehen ist und wobei die zweite Lichtquelle mit dem Gehäuse dahingehend optisch verbunden ist,
dass die durch die zweite Lichtquelle generierte IR-Strahlung über die Lichtwellenleiter in die Gehäuse eingebracht werden kann, wobei
die durch die zweite Lichtquelle generierte IR-Strahlung im Bereich der ersten Lichtquellen abgegeben und dem sichtbaren Licht zur großflächigen Bestrahlung der Fahrzeugumgebung im Gehäuse überlagert werden kann, **dadurch gekennzeichnet, dass** der Lichtwellenleiter zumindest im Bereich der ersten Lichtquelle als Glasfaser-Lichtwellenleiter ausgebildet ist
und dass der Lichtwellenleiter wenigstens aus zwei Teilen besteht, ein Teil im Inneren des Gehäuses und ein Teil außerhalb des Gehäuses, wobei diese Teile über ein im Gehäuse angeordnetes Verbindungselement lösbar optisch miteinander verbunden sind.

11. Fahrzeugscheinwerfersystem nach Anspruch 10,
**dadurch gekennzeichnet,**
**dass** die zweite Lichtquelle zwischen den Gehäusen angeordnet ist.

12. Anordnung zur Verbesserung der Sicht in einem Fahrzeug mit einem Fahrzeugscheinwerfersystem nach einem der Ansprüche 1 bis 11 zur Beleuchtung der Fahrzeugumgebung, einer Kamera, die geeignet ist, IR- Strahlung aus der Umgebung aufzunehmen und einer Bildwiedergabeeinheit, die geeignet ist, die aufgenommenen Bilddaten unmittelbar oder in bearbeiteter Form einem Benutzer zur Verfügung zu stellen.

## Claims

1. Vehicle headlight system for illuminating the surroundings of a vehicle, having a headlight, in particular according to the projection principle, having a housing, a first light source for visible light in the housing, an optical element which is connected to the housing and has the purpose of configuring the distribution of light in the surroundings of the vehicle, and a second light source for infrared radiation, the second light source being arranged outside the housing of the headlight, in particular separate therefrom, and an optical waveguide being provided,
the second light source being optically connected to the housing to the effect that the infrared radiation generated by the second light source is introduced into the housing via the optical waveguide, it being possible for the infrared radiation which is generated by the second light source to be output in the region of the first light source and superimposed on the visible light in the housing in order to irradiate the surroundings of the vehicle over a large area, **characterized in that** the optical waveguide is embodied at least in the region of the first light source as a glass-fibre optical waveguide,
and **in that** the optical waveguide is composed of at least two parts, one part in the interior of the housing and one part outside the housing, it being possible to connect these parts optically to one another in a detachable fashion by means of a connecting element which is arranged in the housing.

2. Vehicle headlight system according to Claim 1, **characterized in that** the end of the optical waveguide is arranged in the region of the light source in such a way that the infrared radiation is output in the direction of an optical element which is embodied as a collecting lens or as a reflector.

3. Vehicle headlight system according to Claim 1 or 2, **characterized in that** the second light source is a laser light source for infrared radiation, in particular for radiation with a wavelength of approximately 808 nm, 850 nm or 875 nm.

4. Vehicle headlight system according to one of the preceding claims, **characterized in that** the optical waveguide exhibits, at least in an end region, a diameter of 1 µm or several 100 µm, in particular of approximately 1 mm.

5. Vehicle headlight system according to one of the preceding claims, **characterized in that** the second light source is arranged in the engine compartment or in the boot.

6. Vehicle headlight system according to one of the preceding Claims 1 to 4, **characterized in that** the second light source is arranged in the passenger compartment of a vehicle.

7. Vehicle headlight system according to one of the preceding Claims 5 or 6, **characterized in that** the second light source is not assigned its own temperature conditioning unit.

8. Vehicle headlight system according to one of the preceding claims, **characterized in that** the second light source is embodied as a cast or encapsulated unit.

9. Vehicle headlight system according to one of the preceding claims, **characterized in that** the optical waveguide is composed of at least two parts, one in the interior of the housing and one outside the housing, these two parts being embodied in different ways.

10. Vehicle headlight system having a plurality of headlights, in particular according to the projection principle, which are provided with a housing, a light source for visible light in the housing and an optical element for configuring the distribution of light and a second light source for infrared radiation,
at least one second light source for infrared radiation, which is arranged outside the housing, and one network composed of optical waveguides being provided, and the second light source being optically connected to the housing to the effect that the infrared radiation generated by the second light source can be introduced into the housings via the optical waveguides, it being possible for the infrared radiation which is generated by the second light source to be output in the region of the first light sources and superimposed on the visible light in the housing in order to irradiate the surroundings of the vehicle over a large area, **characterized in that** the optical waveguide is embodied at least in the region of the first light source as a glass-fibre optical waveguide,
and **in that** the optical waveguide is composed of at least two parts, one part in the interior of the housing and one part outside the housing, it being possible to connect these parts optically to one another in a detachable fashion by means of a connecting element which is arranged in the housing.

11. Vehicle headlight system according to Claim 10, **characterized in that** the second light source is arranged between the housings.

12. Arrangement for improving visibility in a vehicle having a vehicle headlight system according to one of Claims 1 to 11, for illuminating the surroundings of a vehicle, a camera which is suitable for picking up infrared radiation from the surroundings, and an image reproduction unit which is suitable for making the acquired image data available to a user directly or in a processed form.

## Revendications

1. Système de phare de véhicule pour l'éclairage des alentours du véhicule avec un phare, en particulier selon le principe de projection, avec un boîtier, une première source de lumière pour produire une lumière visible dans le boîtier, un élément optique relié au boîtier pour réaliser la distribution de la lumière dans les alentours du véhicule, et une seconde source de lumière pour produire un rayonnement infrarouge, dans lequel la seconde source de lumière est disposée à l'extérieur du boîtier du phare, et en particulier est séparée de celui-ci, et il est prévu un guide d'onde de lumière, dans lequel la seconde source de lumière est reliée optiquement au boîtier de sorte que le rayonnement IR émis par la seconde source de lumière soit introduit dans le boîtier par le guide d'onde de lumière, dans lequel le rayonnement IR émis par la seconde source de lumière peut être délivré dans la région de la première source de lumière et être superposé dans le boîtier à la lumière visible afin de rayonner sur une grande surface dans les alentours du véhicule, **caractérisé en ce que** le guide d'onde de lumière est formé par un guide d'onde de lumière en fibre de verre au moins dans la région de la première source de lumière et **en ce que** le guide d'onde de lumière se compose d'au moins deux parties, une partie à l'intérieur du boîtier et une partie à l'extérieur du boîtier, ces parties étant optiquement reliées l'une à l'autre de façon séparable par un élément de jonction disposé dans le boîtier.

2. Système de phare de véhicule selon la revendication 1, **caractérisé en ce que** l'extrémité du guide d'onde de lumière est disposée dans la région de la source de lumière de telle manière que le rayonnement IR soit délivré en direction d'un élément optique en forme de lentille convergente ou de réflecteur.

3. Système de phare de véhicule selon la revendication 1 ou 2, **caractérisé en ce que** la seconde source de lumière est une source de lumière laser pour un rayonnement IR, en particulier un rayonnement avec une longueur d'onde d'environ 808 nm, 850 nm ou 875 nm.

4. Système de phare de véhicule selon l'une quelconque des revendications précédentes, **caractérisé en ce que** le guide d'onde de lumière présente, dans au moins une région d'extrémité, un diamètre de 1 µm ou de plusieurs 100 µm, en particulier d'environ 1 mm.

5. Système de phare de véhicule selon l'une quelconque des revendications précédentes, **caractérisé en ce que** la seconde source de lumière est placée dans le compartiment moteur ou dans le coffre à bagages.

6. Système de phare de véhicule selon l'une quelconque des revendications précédentes 1 à 4, **caractérisé en ce que** la seconde source de lumière est disposée dans l'espace intérieur d'un véhicule.

7. Système de phare de véhicule selon l'une quelconque des revendications précédentes 5 ou 6, **caractérisé en ce que** la seconde source de lumière ne comporte aucune unité d'équilibrage de la température.

8. Système de phare de véhicule selon l'une quelconque des revendications précédentes, **caractérisé en ce que** la seconde source de lumière se présente sous la forme d'une unité surmoulée ou encapsulée.

9. Système de phare de véhicule selon l'une quelconque des revendications précédentes, **caractérisé en ce que** le guide d'onde de lumière se compose d'au moins deux parties, une à l'intérieur du boîtier et une à l'extérieur du boîtier, ces deux parties étant formées différemment.

10. Système de phare de véhicule avec plusieurs phares, en particulier selon le principe de projection, qui sont pourvus d'un boîtier, d'une source de lumière pour produire une lumière visible dans le boîtier et d'un élément optique pour réaliser la distribution de la lumière, et d'une seconde source de lumière pour produire un rayonnement infrarouge, dans lequel il est prévu au moins une seconde source de lumière pour produire un rayonnement infrarouge disposée à l'extérieur du boîtier et un réseau de bord composé de guides d'onde de lumière et dans lequel la seconde source de lumière est reliée optiquement au boîtier de sorte que le rayonnement IR émis par la seconde source de lumière puisse être introduit dans les boîtiers par les guides d'onde de lumière, dans lequel le rayonnement IR émis par la seconde source de lumière peut être délivré dans la région de la première source de lumière et être superposé dans le boîtier à la lumière visible afin de rayonner sur une grande surface dans les alentours du véhicule, **caractérisé en ce que** le guide d'onde de lumière est formé par un guide d'onde de lumière en fibre de verre au moins dans la région de la première source de lumière et **en ce que** le guide d'onde de lumière se compose d'au moins deux parties, une partie à l'intérieur du boîtier et une partie à l'extérieur du boîtier, ces parties étant optiquement reliées l'une à l'autre de façon séparable par un élément de jonction disposé dans le boîtier.

11. Système de phare de véhicule selon la revendication 10, **caractérisé en ce que** la seconde source de lumière est disposée entre les boîtiers.

12. Dispositif pour améliorer la vision dans un véhicule équipé d'un système de phare de véhicule selon l'une quelconque des revendications 1 à 11 pour l'éclairage des alentours du véhicule, d'une caméra qui convient pour capter un rayonnement IR provenant des alentours, et d'une unité de reproduction d'image qui convient pour mettre à la disposition d'un utilisateur les données d'image captées, immédiatement ou sous une forme traitée.
